# EUROPÄISCHE PATENTSCHRIFT

(11) **EP 1 205 744 B1**
(45) Veröffentlichungstag und Bekanntmachung des Hinweises auf die Patenterteilung: **30.05.2007**
(21) Anmeldenummer: 00710031.6
(22) Anmeldetag: 10.11.2000
(51) Int. Cl.: G01N 21/88

(54) **Reflexionsvorrichtung zur visuellen Materialprüfung mit Kamera geeignetem Licht**
Device for the inspection of materials with reflected light suitable for cameras
Appareil pour l'inspection des matériaux avec lumière réflechie approprié pour des caméras

(43) Veröffentlichungstag der Anmeldung: 15.05.2002
(73) Patentinhaber: VH Lichttechnische Spezialgeräte GmbH, 53604 Bad Honnef-Rhöndorf (DE)
(72) Erfinder: von Hagen, Ulrich, 58644 Iserlohn (DE)
(74) Vertreter: Stenger, Watzke & Ring

(56) Entgegenhaltungen:
- EP-A- 0 582 832
- DE-A- 3 729 553
- DE-A- 19 534 145
- US-A- 5 595 440

## Beschreibung

Die Erfindung betrifft eine Reflexionsvorrichtung für den Einsatz in Beleuchtungsvorrichtungen von Arbeits- und Prüfplätzen bestehend aus wenigstens einer flächigen, aus relativ zueinander einstellbaren, ebenen Segmenten aufgebauten Reflexionsfläche mit einer hochreflektierenden Oberfläche zur Reflexion auftreffender, von wenigstens einer Lichtquelle ausgesandten Strahlen.

Reflexionsvorrichtungen werden insbesondere für den Einsatz in Beleuchtungsvorrichtungen von Arbeits- und Prüfplätzen eingesetzt. Insbesondere bei industriellen Produktionsprozessen werden im Bereich der Produktionsbänder Qualitätskontrollverfahren durchgeführt, zu denen auch eine visuelle Qualitätskontrolle gehört. Im Stand der Technik ist bekannt, daß eine aussagekräftige visuelle Qualitätskontrolle von der Beleuchtung der überwachten Bereiche und der überwachten Produkte abhängt. Zu diesem Zwecke werden Beleuchtungsvorrichtungen zusammengestellt, bei welchen das Licht einer Lichtquelle durch Umlenkreflektoren zur Bestrahlung einer von der Lichtquelle entfernten Reflexionsfläche umgelenkt wird.

Um optimale Beleuchtungsverhältnisse zu gewährleisten, müssen die Lichtquelle, die Umlenkreflektoren und die Reflexionsfläche optimal zueinander ausgerichtet und die Umlenkreflektoren und insbesondere die Reflexionsfläche exakt eingestellt werden. Derartige Installationen sind sehr aufwendig und werden im Bereich der Produktionsbänder als ortsfeste Installation angeordnet.

Ein Nachteil der vorbekannten Reflexionsvorrichtungen besteht darin, daß sie hinsichtlich ihrer Einstellbarkeit beschränkt sind, so daß schwierige Fehler auf bestimmten Oberflächen praktisch gar nicht sichtbar gemacht werden oder nur von ganz besonders geschultem Personal oder unter Anwendung zusätzlicher Maßnahmen erkannt werden können.

Ferner besteht im Stand der Technik das Problem, daß die Werkstücke nur von einer Seite durch eine Bedienperson betrachtet und kontrolliert werden können. Qualitätskontrollen werden oftmals von je zwei Bedienern durchgeführt, welche nach Fehlern auf den von ihnen einsehbaren Bereichen suchen. Nachteilig ist dabei der hohe personelle Aufwand sowie der hohe Platzanspruch, da pro Arbeitsplatz für die zu kontrollierenden Werkstücke zwei Bedienerarbeitsplätze eingerichtet werden müssen.

Einen Lösungsansatz liefert die EP 0833 101, in welcher eine Reflexionsvorrichtung offenbart wird, welche aus einem flächigen Reflexionselement besteht, das aus relativ zueinander einstellbaren Lamellen aufgebaut ist. Obwohl die einzelnen Lamellen beweglich sind, ist das eigentliche flächige Reflexionselement starr und unbeweglich. Ferner offenbart diese Druckschrift die Möglichkeit, Spiegel oder Kameras anzubringen, um hinterschnittene Teile eines Werkstücks einzusehen. Jedoch liegt keine befriedigende Lösung vor, um hinterschnittene Teile, welche nicht genügend ausgeleuchtet werden, zu erfassen, da diese Bereiche nicht im unmittelbaren Blickfeld des Bedieners liegen, und demnach nicht vom Bediener gesehen werden. Zum jetzigen Zeitpunkt müssen die Werkstücke, um auch gerade diese Bereiche prüfen zu können, jeweils einzeln manuell bewegt werden, um eine Einsicht zu gewährleisten. Dies wird z. B. durch Hochheben der Teile bewirkt. Diese Prozedur ist sowohl Personal- als auch zeit- und damit kostenintensiv. Dieses Problem wird nicht durch die einfache Anbringung z. B. eines Spiegels gelöst, da die Bereiche nicht genügend ausgeleuchtet werden, um eine qualitativ hochwertige Prüfung zu sichern.

Die US 5,595,440 offenbart ein Beleuchtungssystem zur Ausleuchtung von großen Flächen, wie beispielsweise Sportarenen, Straßen, Rennbahnen, Theater und dergleichen. Bei der Ausleuchtung von derartig großen Flächen stellt sich das Problem, dass das Licht zum einen die weite Fläche möglichst gleichmäßig ausleuchten soll, zum anderen jedoch nicht grell sein und blenden soll. Um die Anzahl der erforderlichen Lichtquellen in Grenzen halten zu können, ist es erforderlich, diese in möglichst großem Abstand zur auszuleuchtenden Fläche anzuordnen, so dass das von der Lichtquelle ausgesandte divergierende Licht einen möglichst großen Anteil der Fläche ausleuchten kann. Dies ist für viele Anwendungsfälle sehr unpraktisch, weshalb die US 5,595,440 vorschlägt, die Divergenz des Lichtes unter Zuhilfenahme von Reflektoren zu verstärken. Hierdurch kann eine entsprechend virtuelle Verlängerung des Lichtwegs erreicht werden, so dass der Lichtstrahl bei Erreichen der auszuleuchtenden Fläche eine hinreichende Divergenz aufweist.

Die EP 0 582 832 A2 beschreibt ein Reflektorelement, welches zur Ausleuchtung von Räumen vorgesehen ist und an einer Decke befestigbar ist. Das Reflektorelement wird von einer Lichtquelle angestrahlt und reflektiert das Licht bestimmungsgemäß in den Raum. Das Reflektorelement besteht aus einer Reflexionsfläche, in der eine Vielzahl von Teilreflektorflächen ausgeprägt sind. Hierdurch wird erreicht, dass das Reflektorelement das Licht lediglich in diffuser Weise reflektiert. Zur Verstärkung dieses Effekts ist eine mattierende Oberflächenbehandlung vorgesehen. Ziel des Reflektorelements ist es eine möglichst ungerichtete Lichtstrahlung des reflektierten Lichts zu erreichen.

Die DE 37 29 553 A1 offenbart ein Verfahren zur Lichtverteilung in einem geschlossenen Raum. Als Lichtquelle wird hierbei Außenlicht verwendet, welches durch einen speziell gestalteten Fensterbereich in den Raum eintritt und mittels Reflektorelementen in wunschgemäßer Weise zum Ausleuchten des Raums verwendet wird.

Durch die starre Anordnung der in der Qualitätskontrolle bekannten Reflexionselemente, sind die bekannten Systeme nicht nach den unterschiedlichen Bedürfnissen der unterschiedlichen Anwender veränderbar. Da jedoch wechselnde Anforderungen an unterschiedliche Werkstückoberflächen, Materialien, Objektformen und Bediener gestellt werden, ist eine einfache Einstellung und Anpassung der Beleuchtung durch das Reflexionselement erstrebenswert.

Davon ausgehend liegt der Erfindung die **Aufgabe** zugrunde, eine Reflexionsvorrichtung der gattungsgemäßen Art dahingehend zu verbessern, daß bei wirtschaftlicher Herstellung und Montage, die Bedienung eines Prüfplatzes durch eine Person ermöglicht wird und gleichzeitig auch bislang nicht einsehbare Bereiche für eine Prüfung genügend ausgeleuchtet und für den Bediener sichtbar gemacht werden. Ferner soll eine derartige Reflexionsvorrichtung individuell einstellbar sein, so daß auch der Winkel der Lichtreflexion und somit der Fokus des Lichts individuell verstellbar ist. Des weiteren liegt der Erfindung die Aufgabe zugrunde eine Reflexionsvorrichtung zu gestalten, die diese Ziele bei hohen Vorschubgeschwindigkeiten ermöglicht und dennoch schwer erkennbare Materialfehler deutlich und schnell sichtbar macht.

Zur technischen **Lösung** dieser Aufgabe wird eine gattungsgemäße Reflexionsvorrichtung dahingehend weitergebildet, daß die Reflexionsfläche zumindest zweigeteilt ist, so daß wenigstens zwei Teilflächenelemente mit Segmenten gebildet sind, wobei die Teilung der Reflexionsfläche entlang einer parallel zur Strahlungsrichtung verlaufenden Ebene erfolgt, und die durch die Teilung gebildeten Teilflächenelementerelativ zueinander bewegbar sind, wobei ausschließlich indirektes, gerichtetes Licht auf die zu begutachtende Werkstückoberfläche trifft, welches annähernd parallel ist. Ferner ist wenigstens eine variabel positionierbare Vorrichtung zur Sichtbarmachung und Aufhellung von dem Bediener nicht direkt einsehbaren Bereichen eines Werkstücks angeordnet. Desweiteren trägt zur Lösung der Aufgabe bei, daß durch den Aufbau der erfindungsgemäße Vorrichtung ausschließlich indirektes, gerichtetes Licht auf die zu prüfenden Werkstücke trifft.

Die erfindungsgemäße Reflexionsvorrichtung besteht aus wenigstens einer Lichtquelle, vorzugsweise einer Leuchte, die das Licht über einen Umlenkreflektor auf die eigentliche Reflexionsfläche lenkt. Diese Reflexionsfläche weist eine hoch reflektierende Oberfläche auf. Durch die erfindungsgemäße, zweifache Umlenkung des durch die Leuchte erzeugten Lichts, wird ein fast paralleles, indirektes Licht erzeugt. D.h., daß das Licht nicht einfach nur reflektiert wird, sondern auch gerichtet (polarisiert) wird.

In vorteilhafter Weise besteht die Reflexionsfläche aus mehreren relativ zueinander einstellbaren Segmenten. Diese Segmente können Lamellen mit beispielsweise einer zumindest metallischen Oberfläche sein. Als besonders vorteilhaft hat sich die Verwendung von Lamellen aus Aluminium herausgestellt. Aber auch andere Materialien sind erfindungsgemäß vorgesehen, sofern sie eine ausreichend gute Beleuchtung des Werkstücks ermöglichen. Somit ist in vorteilhafter Weise die Funktion ohne weitere Lichtquellen erzielbar.

In besonders vorteilhafter Weise sind die Segmente zueinander verstellbar. Durch diese vorteilhafte Ausgestaltung steht jede Lamelle in einem anderen Winkel zum Umlenkreflektor. Dabei verlaufen die Segmente in ihrer Längsrichtung quer zur Reflexionsrichtung und sind ferner um ihre Längsachse verdrehbar. Jede Lamelle baut nach dem physikalischen Prinzip "der Einfallswinkel eines Lichtstrahls ist gleich seinem Ausfallswinkel" eine eigene Reflexion auf. Dadurch wird in besonders vorteilhafter Weise gewährleistet, daß bei Bewegung des Werkstücks z.B. durch ein Förderband, eine Anzahl von Reflexionen entstehen, die den Fehler, welcher zu einer Ablenkung des gerichteten Stahlengangs führt, in wechselnden Winkeln, einmal heller, einmal dunkler erscheinen lassen. Diese Reflexionen bewirken eine starke Konturierung des Fehlers, und führen damit zu einer einfachen und schnellen Identifizierung desselben. Da derartige Prüfverfahren viel Routine aufweisen, kann leicht die Aufmerksamkeit des Bedieners nachlassen. Durch die erfindungsgemäße Vorrichtung wird jedoch aufgrund der leichten Erkennbarkeit der Materialfehler ermöglicht, daß auch weniger aufmerksame Mitarbeiter solche erkennen können. Ferner sind Materialfehler jeglicher Art schon aus den Augenwinkeln erkennbar. Durch die einfache Identifizierung ermöglicht es die vorliegende Erfindung, die Vorschubgeschwindigkeit der zu prüfenden Objekte auf z.B. einem Förderband zu erhöhen. Dadurch erwächst mit dem erfindungsgemäßen Verfahren ein beträchtlicher wirtschaftlicher Nutzen, da mehr Werkstücke in der selben Zeit kontrolliert werden können. Ferner fördert das erfindungsgemäße Verfahren eine höhere Konstanz in der Produktqualität und ermöglicht eine bessere Nutzung gegebener Kapazitäten, was in einem effektiven und wirtschaftlichen Arbeiten resultiert.

Ein erfindungswesentliches Merkmal sieht vor, die aus einzelnen Lamellen gebildete Reflexionsfläche zumindest zweizuteilen und ferner in vorteilhafter Weise eine Bewegung der einzelnen Teilflächenelemente zueinander zu gewährleisten. Dabei verläuft die Teilung der Reflexionsfläche entlang einer parallel zur Strahlungsrichtung verlaufenden Ebene. Eine besonders vorteilhafte erfindungsgemäße Ausführungsform sieht vor, die Reflexionsfläche in drei zueinander bewegliche und in einem Winkel verstellbare Teilflächenelemente zu teilen. Durch die Teilung wird in besonders vorteilhafter Weise gewährleistet, daß der Winkel der Lichtreflexion der einzelnen Teilflächenelemente des Reflexionselements verändert werden kann. Dadurch kann in besonders vorteilhafter Weise der Fokus des Lichtsegels verändert werden. Dadurch ist eine individuelle Einstellung an die gegebenen Voraussetzungen wie z.B. Werkstückgröße, Form oder Ähnliches möglich.

Viele Werkstücke weisen eine besondere Geometrie auf, wie z.B. Wölbungen in alle Richtungen. Daher ist es aufgrund der gegebenen Geometrie oftmals nicht möglich, von einer Seite aus das ganze Werkstück zu prüfen. Ein herausragendes Merkmal der vorliegenden Erfindung sieht vor, zusätzlich zu der eigentlichen Reflexionsfläche wenigstens eine weitere variabel positionierbare Vorrichtung anzuordnen, die zu einer Sichtbarmachung und insbesondere zur Aufhellung der vom Bediener nicht direkt einsehbaren Bereiche führt. Dabei kann diese Vorrichtung aus mehreren Reflexionselementen bestehen, die auf der dem Bediener gegenüberliegenden Seite des Arbeitsplatzes angeordnet sind. In einer erfindungsgemäßen Ausführungsform ist eines der Reflexionselemente ein Spiegel. In vorteilhafter Weise sieht die Erfindung vor, diesen Spiegel zum Bediener und/oder Arbeitsplatz variabel zu positionieren. So kann dieser verfahbar sein, wobei eine Bewegung in jede Richtung möglich ist. Dadurch wird in vorteilhafter Weise gewährleistet, daß die Höhe der Spiegelposition an die Körpergröße des Bedieners oder an Arbeitsplatzbesonderheiten angepaßt werden kann. Ferner sind auch Varianten bzw. Anwendungen erfindungsgemäß umfasst, wo der Spiegel fest installiert und damit unbeweglich ist. Durch die Anbringung einer derartigen Vorrichtung, z.B. eines Spiegels, ermöglicht es die erfindungsgemäße Vorrichtung dem Bediener in bestechend einfacher Weise, die ihm gegenüberliegende Seite, also vom Bediener aus betrachtet die Rückseite, des zu prüfenden Werkstücks zu betrachten und zu beurteilen. Das führt zu einer außerordentlich hohen Kosteneinsparung, da anstatt zwei Personen eine Person die Prüfung beider Seiten des Werkstücks gleichzeitig von einer Bandseite aus durchführen kann. Dies führt zu einer Einsparung von Arbeitskräften. Ferner können die Arbeitsplätze äußerst platzsparend angeordnet werden, da zumindest ein Bedienerplatz pro Arbeitsplatz eingespart werden kann, da von einer Seite aus operiert wird. Durch die effektivere Nutzungsmöglichkeiten des Arbeitsraumes können zusätzliche Kosten eingespart werden, da mehr Arbeitsplätze auf gegebener Raumkapazität eingerichtet werden können.

Ferner wird durch die erfindungsgemäße Reflexionsvorrichtung der aus dem Stand der Technik bekannte Nachteil gelöst, daß die Bombierung eines Werkstücks diesen Teil dunkler erscheinen läßt. Durch das erfindungswesentliche Merkmal, wenigstens eine variabel positionierbare Vorrichtung zur Sichtbarmachung und Aufhellung von dem Bediener nicht direkt oder nur unvollkommen einsehbaren Bereichen eines Werkstücks, gelöst. Erfindungsgemäß umfasst diese Vorrichtung reflektierende Mittel, zusätzlich zu dem oben beschriebenen Spiegel, die diese Bereiche des Werkstückes durch Lenkung des Lichts der Reflexionsfläche auf die dem Bediener abgewandte Seite des Werkstücks, ausleuchten. Dadurch wird in vorteilhafter Weise eine Aufhellung dieser Bereiche erzielt, ohne daß eine weitere Lichtquelle benötigt wird. Dieser aufgehellte Teil sieht der Bediener im Spiegel. Vorteilhafter Weise sind diese Mittel zumindest oberhalb des Spiegels positioniert.

Eine weitere Ausgestalltungsform dieser Vorrichtung sieht erfindungsgemäß auch die Anordnung weiterer reflektierender Mittel im Bereich des Spiegels vor. Durch die Anordnung dieser weiteren Mittel insbesondere unterhalb des Spiegels, können auch sogenannte "hinterschnittene" Teile des Werkstücks eingesehen werden. Bislang war die Kontrolle dieser Bereiche nur möglich, wenn das Werkstück angehoben wurde, da diese Bereiche nicht genügend ausgeleuchtet wurden. Neben dem unwirtschaftlichen Zeitaufwand birgt diese Vorgehensweise ferner die Gefahr, daß durch unvorsichtige Behandlung erst Fehler entstehen, wie z.B. strichförmige Verletzungen der Oberfläche. Die erfindungsgemäße Vorrichtung eliminiert diese Probleme auf einfache, effiziente Weise, da durch die Anordnung eines reflektierenden Mittels im Bereich unterhalb des Spiegels, eine Beleuchtung der hinterschnittenen Bereiche und somit auch eine Kontrolle dieser Bereiche ermöglicht wird.

Gemäß einer Ausführungsform sind die reflektierenden Mittel oberhalb und unterhalb des Spiegels angeordnet. In einer bevorzugten Ausführungsform sind diese Reflexionselemente Lamellen. Dabei ist erfindungsgemäß auch eine Mehrzahl von Lamellen vorgesehen. Je nach Bedarf kann die Anzahl der verwendeten Lamellen ober- und unterhalb des Spiegels variieren. Gemäß einer besonders vorteilhaften Ausgestaltungsform der vorliegenden Erfindung ist vorgesehen, die Lamellen untereinander, sowie das ganze oberhalb und/oder unterhalb des Spiegels liegende Reflexionselement beweglich anzuordnen. Dadurch wird in vorteilhafter Weise gewährleistet, daß die jeweiligen Reflexionswinkel den vorliegenden Prüfbegebenheiten angepaßt werden können. Vorzugsweise sind diese Lamellen in dem selben Material wie die der Reflexionsfläche gestaltet. Dies kann zum Beispiel hochreflektierendes Aluminium sein. Erfindungsgemäß ist jedoch auch vorgesehen, die Materialien der Lamellen sowohl zwischen, als auch innerhalb der einzelnen Mittel und Elemente zu variieren, falls dies erforderlich und/oder wünschenswert ist.

Eine weitere erfindungsgemäße Ausführungsform beinhaltet den Einsatz einer Kamera, um nicht einsehbare Bereiche dem Bediener optisch zugänglich zu machen. Durch die besonderen Beleuchtungsverhältnisse der erfindungsgemäßen Reflexionsvorrichtung ist der Einsatz einer Kamera aufgrund der erfindungsgemäßen Vorrichtung problemlos, da die Erfindung eine gerichtete und blendfreie Beleuchtung zur zuverlässigen Erkennung und Darstellung der nun einsehbaren Bereiche ermöglicht. Der Einsatz einer Kamera ermöglicht es ferner, Ausschnitte von Bereichen auf einem Monitor zu zoomen und somit kleinste Details zu kontrollieren. Der Einsatz einer derartigen Kamera ist insbesondere für die Beobachtung hinterschnittener Teile geeignet. Ferner ist durch Datenspeicherung auch eine Sicherung von Informationen möglich, so daß auch im Nachhinein die Möglichkeit zur Kontrolle und/oder Aufklärung bei Auftreten von Fehlern besteht.

Gemäß einer weiteren vorteilhaften Ausgestaltung der erfindungsgemäßen Vorrichtung kann eine relativ geringe Luxzahl eingesetzt werden, da durch die erfindungsgemäße Anordnung eine hohe Leuchtdichte gewährleistet wird. Somit kommt eine geringe Luxzahl auf der Prüffläche an, die durch den Einsatz von Filtern und Dimmern steuerbar ist. Gemäß einer besonders vorteilhaften erfindungsgemäßen Ausgestaltung liegt die Lichtfarbe wenigstens bei 5500 Kelvin. Diese zum stahlblauen tendierende Lichtfarbe ist insbesondere zur Kontrolle von Metallteilen geeignet. Dieses sehr augenschonende Licht ermöglicht eine Kontrolle von Werkstücken über eine langen Zeitraum, ohne das Ermüdungserscheinungen des Sehapparates auftreten. Jedoch können auch höhere Kelvin erreicht werden.

Erfindungsgemäß ist vorgesehen, ein Dimmsystem zu installieren. Gemäß einer vorteilhaften Ausführungsform der vorliegenden Erfindung erfolgt die Lichtregelung je Bandseite. Durch die Regelbarkeit wird eine Anpassung der Lichtstärke an gegebene Verhältnisse ermöglicht. Dadurch können die Beleuchtungseinstellungen an die Tages-, Jahres- oder Schichtzeit angepaßt werden. Dadurch werden auch spezielle Einstellungen ermöglicht, die durch die Art des zu prüfenden Werkstücks definiert werden, wie z.B. der Glanzgrad der Oberfläche. Ferner wird den Benutzern durch ein derartiges System ermöglicht, die Lichtverhältnisse an die individuellen Besonderheiten und/oder Vorlieben des Bedieners anzupassen. Ferner haben Lampen die durch ein Dimmsystem betrieben werden eine höhere Lebensdauer. Dies und der durch die erfindungsgemäßen Besonderheiten bedingte, insgesamt geringe Aufwand an Leuchtmitteln, bedingt auch die Wirtschaftlichkeit der vorliegenden Erfindung. Gemäß einer vorteilhaften Ausführungsform handelt es sich bei dem erfindungsgemäßen Dimmsystem um eine sanfte Phasenschnittsteuerung mit wenigstens vier Schaltstufen. Aber auch die stufenlose Einstellung ist von dem Erfindungsgedanken umfasst. Bei einer Ausführungsform mit vier Stufen haben sich in der Praxis Werte von 95/70/50 und 35% der Nennbeleuchtungsstärke als vorteilhaft erwiesen. Die einzelnen Werte können jedoch variiert werden, in Abhängigkeit von den vorliegenden Prüfbegebenheiten.

In vorteilhafter Weise sind die Bewegungen der einzelnen Elemente der vorliegenden Erfindung steuerbar. Die Steuerung und Einstellungen können z.B. durch einen Rechner erfolgen. Gemäß einer Ausgestaltungsform können die einzelnen Elemente auch direkt durch den Bediener am Arbeitsplatz gesteuert werden, so daß insbesondere die Veränderung der Leuchtwinkel direkt ermöglicht wird, so daß schnell und unkompliziert auf die jeweiligen Situationen und Begebenheiten bei der Prüfung reagiert werden kann.

Gemäß einer vorteilhaften Ausgestaltung ist erfindungsgemäß vorgesehen, eine Schaltvorrichtung am Arbeitsplatz anzuordnen. Dabei kann z.B. auf wenigstens einer Bandseite ein Schalttableau in Aufnahmevorrichtungen wie z.B. Pulte und/oder Schränke eingebaut werden, welches ermöglicht, verschiedenste Funktionen zu steuern.

Erfindungsgemäß ist vorgesehen, daß die einzelnen Elemente zumindest teilweise in einer Baugruppe verbunden sind. Zur Verbesserung der Einrichtbarkeit sowie des variablen Einsatzes einer Beleuchtungsvorrichtung wird vorgeschlagen, daß die Einheit Lichtquelle, Umlenkreflektor und die erfindungsgemäßen Reflexionsflächen an einem Tragegerüst angeordnet sind. Ein derartiges Tragegerüst kann ferner mit Befestigungsvorrichtungen versehen sein, die eine einfache Befestigung im Überwachungsbereich gewährleisten. In vorteilhafter Weise ist an dem Traggerüst ein zum Betrieb erforderliches Schaltpult angeordnet, in dem Vorrichtungen zur Einstellung der Reflexionsvorrichtung wie z.B. die Dimmvorrichtung, untergebracht sind. Dieses Pult kann auch in Form eines Schranks gestaltet sein, um in vorteilhafter Weise eine versehentliche Veränderung der gegebenen Parameter zu verhindern.

Die Anzahl der Lichtquellen, der Umlenkreflektoren und der Reflexionsflächen richten sich nach dem gewünschten Einsatzspektrum. Mit der erfindungsgemäßen Reflexionsvorrichtung kann eine Beleuchtungsvorrichtung aufgrund der integrierten Bauweise mit wenigen Bauteilen kostengünstig hergestellt und eingerichtet werden. Durch die erfindungsgemäße Gestaltung ist die vorgeschlagene Vorrichtung hinsichtlich ihres Einsatzes höchst variabel und nur wenig störanfällig.

Dabei können in einer derartigen erfindungsgemäßen Baugruppe auch zusätzliche Reflexionsflächen angeordnet werden, die einen im Vergleich mit der von der Reflexionsfläche erzeugten Strahlengang abweichenden Strahlengang erzeugen. Dabei können erfindungsgemäß ein zusätzliches, mehrere mit Lücke, im Winkel zueinander angeordnete, die Reflexionsfläche einrahmende oder sonstwie angeordnete zusätzliche Reflexionselemente verwendet werden, soweit dies zur Erzeugung des gewünschten Lichts benötigt wird.

Gemäß einer weiteren Ausführungsform der vorliegenden Erfindung sind ferner zusätzliche Reflexionsgruppen in Form von mobilen Einheiten vorgesehen. Dabei können in einer vorteilhaften Ausführungsform drei Lamellen auf einer Tragfläche befestigt werden. Diese Konstruktion kann dann so eingestellt werden, daß sie ebenfalls das Licht der geteilten Reflexionsfläche aufnimmt. Dadurch wird eine Anschnittsbeleuchtung erzielt, welche in Kombination mit der Konstruktion der Reflexionsvorrichtung die Fehlererkennung unterstützt. In vorteilhafter Weise ist auch diese Vorrichtung in sich beweglich, so daß Winkelveränderungen möglich sind.

Weitere Vorteile und Merkmale der Erfindung ergeben sich aus der folgenden Beschreibung anhand der Figur. Dabei zeigt:

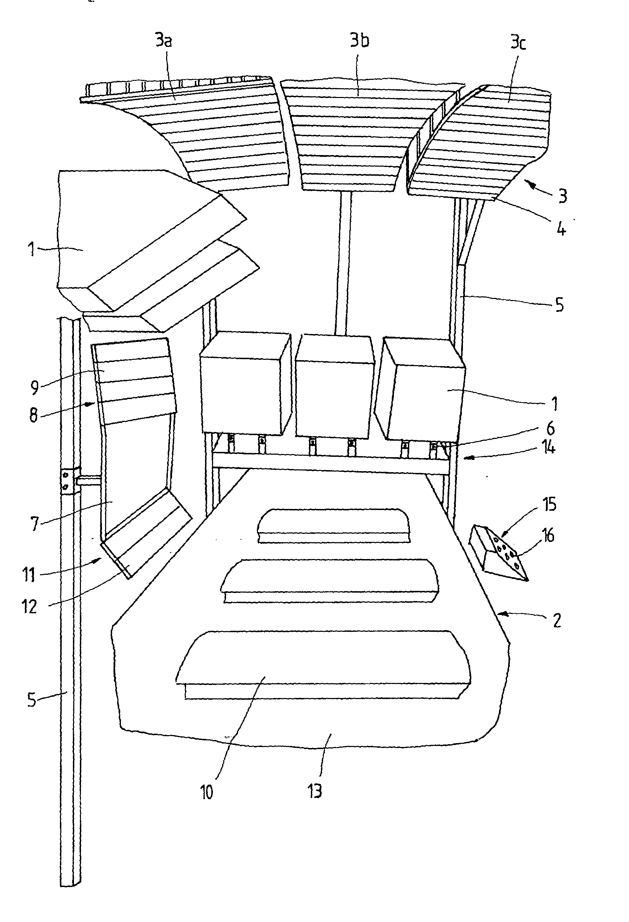

Figur 1 eine schematische Frontalansicht auf einen Aufbau der erfindungsgemäßen Reflexionsvorrichtung gemäß einer Ausführungsform.

Wie Figur 1 zeigt, umfaßt die Beleuchtungsvorrichtung 1 ein Gehäuse, in dem eine Leuchte sowie ein Umlenkreflektor angeordnet sind. Dabei können mehrere Beleuchtungsvorrichtungen angebracht werden, z. B. wie dargestellt nebeneinander angeordnet. Erfindungsgemäß ist dabei vorgesehen, daß die Beleuchtungsvorrichtungen verfahrbar angeordnet sind, so daß eine Veränderung des Strahlengangs durch Bewegung der Beieuchtungsvorrichtung ermöglicht wird. In vorteilhafter Weise kann die Lichtregelung je Bandseite geschehen. Bei einer besonders vorteilhaften Ausführungsform liegt die positionierte Lichtrichtung im 90° Winkel zur Arbeitsfläche 2. Diese Arbeitsfläche kann auch beweglich sein, z. B. in Form eines Förderbandes, welches die zu kontrollierenden Werkstücke an den Bediener heranführt.

Das von der Beleuchtungsvorrichtung 1 ausgesandte Licht wird von der Reflexionsfläche 3, welches aus einzelnen, quer zur Reflexionsfläche verlaufenden Lamellen 4 gebildet wird, reflektiert. Diese Reflexionsfläche 3 ist zumindest zweigeteilt. In der dargestellten Ausführungsform liegt eine dreigeteilte Reflexionsfläche 3 vor, wodurch das Reflexionselement 3 in drei Teilflächenelemente (3a, 3b, 3c) geteilt wird. Diese Elemente sind beweglich zueinander angeordnet, so daß die eigentlichen Winkel der Reflexionsflächen verstellbar sind. Durch die Kombination dieser geteilten Reflexionsfläche 3 mit der Beleuchtungsvorrichtung 1 lassen sich auch tiefgezogene Teile z.B. im Seitenteil (auch auf einem gedachten Kreisbogen) beleuchten und ermöglichen es auch Fehler zu erkennen, die in Bandlaufrichtung verlaufen. Dadurch wird die Erkennung z.B. von feinen strichförmigen Verletzungen der Oberfläche möglich, da der Fokus des Lichtsegels 3, durch die beweglichen Teilflächenelemente 3a-c individuell durch Veränderung der Winkeleinstellung der Teilflächenelemente 3a-c zueinander, verändert werden kann.

Die aus Beleuchtungsvorrichtung 1, und Reflexionsfläche 3 bestehende Baugruppe ist gemäß dieses Ausführungsbeispiels an einem Tragegerüst 5 angeordnet, welches die Reflexionsfläche 3 über dem Arbeitsplatz positioniert. Dabei sind die einzelnen Elemente der Reflexionsfläche 3 derart mit dem Gerüst verbunden, daß sie im Winkel zueinander verstellt werden können. Bei dem Traggerüst 5 handelt es sich um ein Leichtbau-Traggerüst, an welchem die Baugruppe mittels Haltelaschen befestigt sein kann. Aber auch andere Befestigungs- und/oder Anordnungsmöglichkeiten sind erfindungsgemäß vorgesehen. Die Beleuchtungsvorrichtung kann mittels Augenschrauben 6 befestigt werden.

Zusätzlich sind am Traggerüst 5 weitere Elemente angeordnet, welche die Sichtbarmachung von nicht einsehbaren Bereichen ermöglichen. An dem Traggerüst 5 ist ein Spiegel 7 befestigt, welche die dem Bediener gegenüberliegende, nicht einsehbare Seite reflektiert. Dieser Spiegel 7 ist relativ zur Arbeitsfläche am Tragegerüst verfahrbar, so daß die Spiegelposition auf die Körpergröße des Bedieners abgestimmt werden kann. In vorteilhafter Weise beinhalten die Bewegungsmöglichkeiten Positionsveränderungen des Spiegels 7 sowohl horizontal als auch vertikal.

Oberhalb des Spiegels 7 ist ein Reflexionsmittel 8 angebracht, welches aus vier Lamellen 9 aufgebaut wird. Dadurch wird gewährleistet, daß das Licht der dreigeteilten Reflexionsfläche 3 auf die dem Bediener abgewandte Seite des Werkstücks 10 trifft. Dadurch erfährt diese Seite des Werkstücks 10 eine Aufhellung. Den aufgehellte Teil des Werkstücks sieht der Bediener im Spiegel 7.

Sowohl die Lamellen 9 als auch das Reflexionsmittel 8 sind zumindest teilweise beweglich. Dadurch ist eine Anpassung an vorherrschende Begebenheiten wie z.B. Werkstückgröße, Geometrie oder ähnliches möglich.

Unterhalb des Spiegels 7 ist ein weiteres Reflexionsmittel 11 angebracht, welches aus zwei Lamellen 12 gebildet wird. Diese Lamellen 12 am unteren Rand des Spiegels 7 beleuchten hinterschnittene Teile des Werkstücks, welche der Bediener bislang nur sehen konnte, wenn er das Werkstück angehoben hat. Wie beim Reflexionsmittel 8 ist auch dieses Reflexionsmittel 11 unterhalb des Spiegels zumindest teilweise beweglich, um Veränderungen des Strahlenganges etc. zu ermöglichen und somit eine Anpassung an die Prüfsituation zu gewährleisten.

In vorteilhafter Weise kann am Traggerüst 5 auch eine Kamera positioniert werden. Je nach Position können unterschiedliche Bereiche eingesehen werden, wie z.B. hinterschnittene Partien des Werkstücks 10. Auf einem Monitor, der im Arbeitsbereich angeordnet werden kann, können Ausschnitte des Teiles auch gezoomt werden, was eine Kontrolle von kleinsten Details ermöglicht.

Oberhalb dieser Konstruktion aus Spiegel 7, Reflexionsmittel 9 und Reflexionsmittel 11 sind zusätzliche Beleuchtungsvorrichtungen 1 angeordnet, welche das Lichtsegel in einem anderen Winkel bestrahlen und dadurch weitere Reflexionen bewirken. Die zu prüfenden Werkstücke werden auf einem Förderband 13 an dem Bediener vorbei geführt. Die Geschwindigkeit ist individuell regulierbar, um die Fördergeschwindigkeit der Werkstücke, an die Arbeitsgeschwindigkeit des Bedieners und/oder die Komplexität des Werkstücks anzupassen.

In vorteilhafter Weise sind Abschirmungsvorrichtungen 14 vorgesehen, die wie dargestellt Textilien, in Form von Vorhängen sein können. Durch eine derartige Abschirmvorrichtung wird gewährleistet, daß nur das durch die Reflexionsvorrichtung erzeugte indirekte, gerichtete Licht im Bereich der Arbeitsfläche auftrifft. Dieses Licht ist daher in vorteilhafter Weise annähernd parallel.

Ferner ist erfindungsgemäß vorgesehen, einen Schaltschrank 15 im Bedienerbereich anzuordnen, an dem eine Bedienertafel 16 befestigt ist. Dabei können gemäß eines erfindungsgemäßen Vorgangs diverse Funktionen kontrolliert werden. So sind Funktionen zum Ein und Ausschalten der Anlage, zur Kontrolle der Dimmeinrichtung, Störmeldungen und Lampenüberprüfung vorgesehen. Ferner ist es vorteilhaft, auch eine Kontrolle der Förderbandgeschwindigkeit in diesem Schaltschrank einzurichten. Desweiteren wird erfindungsgemäß eine Bypass Schaltung der Dimmereinrichtung vorgeschlagen, für den Fall, daß der Dimmer ausfällt. Dadurch ist der Betrieb der Anlage ohne Dimmer möglich.

Aufgrund ihrer vorteilhaften Eigenschaften findet die erfindungsgemäße Reflexionsvorrichtung ein weites Anwendungsgebiet. Insbesondere zur lichttechnischen und ergonomischen Optimierung von Arbeits- und Prüfplätzen, an denen visuelle Prüfungen der Oberfläche vorgenommen werden. Dabei reichen die zu überprüfenden Materialien von den unterschiedlichsten Metalloberflächen bis hin zur Kontrolle der Oberfläche und von Einschlüssen von z.B. Glas und Spiegeln. Aber auch Kunststoff-, Keramik, lackierte Oberflächen oder aufmetallisierte Oberflächenschichten sind durch das erfindungsgemäße Verfahren überprüfbar. Durch das erfindungsgemäße Verfahren wird in vorteilhafter Weise ermöglicht, Oberflächenfehler wie Dellen, Riefen oder Beulen sowie auch Fehler im Material selber, wie z.B. Einschlüsse in Glas oder Kunststoff zu erkennen.

Die erfindungsgemäße Vorrichtung ermöglicht die Fehlerbewertung von Oberflächen und Materialqualitäten, besser als die herkömmlichen und unkonstanten Beleuchtungen. Durch das erfindungsgemäße Verfahren ist dies zu einem frühen Produktionsstadium möglich, was durch frühzeitige Verhinderung der Weiterbearbeitung von fehlerhaften Werkstücken bewirkt wird. Insbesondere in der Automobilindustrie bei der Überprüfung von Karrosseriebestandteilen ist die erfindungsgemäße Vorrichtung einsetzbar. Die erfindungsgemäße Vorrichtung ermöglicht durch das erzeugte blendfreie und augenfreundliche Licht ein ermüdungsfreies und konzentriertes Arbeiten. Dies führt wiederum zu einer erhöhten Wirtschaftlichkeit, da eine höhere Konstanz in der Produktqualität. Ferner ermöglicht es die Erfindung aufgrund ihrer besonderen Ausgestaltungen, daß vorhandene Kapazitäten besser genutzt werden können.

### Bezugszeichenliste

- 1: Beleuchtungsvorrichtung
- 2: Arbeitsfläche
- 3: Reflexionselement
- 3 a, b, c: Teilflächenelemente
- 4: Lamellen
- 5: Tragegerüst
- 6: Augenschrauben
- 7: Spiegel
- 8: Reflexionsmittel
- 9: Lamellen
- 10: Werkstück
- 11: Reflexionsmittel
- 12: Lamellen
- 13: Förderband
- 14: Abschirmungsvorrichtung
- 15: Schaltschrank
- 16: Bedienertafel

## Patentansprüche

1. Reflexionsvorrichtung für den Einsatz in Beleuchtungsvorrichtungen von Arbeits- und Prüfplätzen bestehend aus wenigstens einer flächigen, aus relativ zueinander einstellbaren, ebenen Segmenten (4) aufgebauten Reflexionsfläche (3) mit einer hochreflektierenden Oberfläche zur Reflexion auftreffender, von wenigstens einer Lichtquelle (1) ausgesandten Strahlen,
**dadurch gekennzeichnet,**
**daß** die Reflexionsfläche (3) zumindest zweigeteilt ist, so daß wenigstens zwei Teilflächenelemente (3a, 3b, 3c) mit Segmenten (4) gebildet sind, wobei die Teilung der Reflexionsfläche (3) entlang einer parallel zur Strahlungsrichtung verlaufenden Ebene erfolgt und die durch die Teilung gebildeten Teilflächenelemente (3a, 3b, 3c) relativ zueinander bewegbar sind, wobei ausschließlich indirektes, gerichtetes Licht auf die zu begutachtende Werkstückoberfläche trifft, welches annähernd parallel ist.

2. Reflexionsvorrichtung nach Anspruch 1, **dadurch gekennzeichnet, daß** die aus der Teilung der Reflexionsfläche (3) resultierenden Teilflächenelemente (3a, 3b, 3c) relativ in einem Winkel zueinander verstellbar sind.

3. Reflexionsvorrichtung nach Anspruch 1 oder 2, **dadurch gekennzeichnet, daß** die die Reflexionsfläche (3) bildenden Segmente (4) in Längsrichtung quer zur Reflexionsrichtung verlaufen und die Segmente (4) um ihre Längsachse bewegbar sind.

4. Reflexionsvorrichtung nach einem oder mehreren der vorherigen Ansprüche, **dadurch gekennzeichnet, daß** wenigstens eine variabel positionierbare Vorrichtung (7, 8, 11) zur Sichtbarmachung und Aufhellung von dem Bediener nicht direkt einsehbaren Bereichen eines Werkstücks (10) angeordnet ist.

5. Reflexionsvorrichtung nach einem oder mehreren der Ansprüche 1 bis 4, **dadurch gekennzeichnet, daß** sie wenigstens eine Lichtquelle (1) aufweist.

6. Reflexionsvorrichtung nach einem oder mehreren der vorherigen Ansprüche 1 bis 5, **dadurch gekennzeichnet, daß** eine zweifache Lichtumlenkung durch einen Umlenkreflektor und die Reflexionsfläche (3) erfolgt.

7. Reflexionsvorrichtung nach einem oder mehreren der vorherigen Ansprüche 1 bis 6, **dadurch gekennzeichnet, daß** die Reflexionsfläche (3) konkav in Richtung Strahlungsquelle (1) gewölbt ist.

8. Reflexionsvorrichtung nach einem oder mehreren der vorherigen Ansprüche 1 bis 7, **dadurch gekennzeichnet, daß** die Reflexionsfläche (3) in drei im Verhältnis zueinander bewegliche und in einem Winkel zueinander einstellbaren Teilflächenelemente (3a, 3b, 3c) geteilt ist.

9. Reflexionsvorrichtung nach einem oder mehreren der vorherigen Ansprüche 1 bis 8, **dadurch gekennzeichnet, daß** die Teilflächenelemente (3a, 3b, 3c) über Gelenkaufhängen angeordnet sind, welche eine Bewegung der Teilflächenelemente (3a, 3b, 3c) dergestalt ermöglichen, daß der Winkel der Lichtreflexion durch den Fokus der in sich beweglichen und zumindest zweigeteilten Reflexionsfläche (3) bestimmbar ist.

10. Reflexionsvorrichtung nach einem oder mehreren der vorherigen Ansprüche 1 bis 9, **dadurch gekennzeichnet, daß** die relativ zueinander einstellbaren Segmente (4) der Reflexionsfläche (3) Lamellen sind.

11. Reflexionsvorrichtung nach Anspruch 10, **dadurch gekennzeichnet, daß** die Lamellen (4) aus Aluminium sind.

12. Reflexionsvorrichtung nach einem oder mehreren der vorherigen Ansprüche 1 bis 11, **dadurch gekennzeichnet, daß** die Strahler (1) eine hohe Leuchtdichte aufweisen, und daß eine relativ geringe Luxzahl auf der Prüffläche ankommt.

13. Reflexionsvorrichtung nach einem oder mehreren der vorherigen Ansprüche 1 bis 12, **dadurch gekennzeichnet, daß** sie Filter und Dimmer aufweist, welche die Luxzahl, die auf der Prüffläche ankommt, steuern.

14. Reflexionsvorrichtung nach einem oder mehreren der vorherigen Ansprüche 1 bis 13, **dadurch gekennzeichnet, daß** die Lichtfarbe wenigstens bei 5500 Kelvin liegt.

15. Reflexionsvorrichtung nach einem oder mehreren der vorherigen Ansprüche 1 bis 14, **dadurch gekennzeichnet, daß** die Vorrichtung (7, 8, 11) zur Sichtbarmachung der dem Bediener gegenüberliegenden Seite mehrere Reflexionselemente (9, 12) aufweist.

16. Reflexionsvorrichtung nach Anspruch 15, **dadurch gekennzeichnet, daß** die Reflexionselemente (9, 12) aus einem Spiegel (7) und zumindest einer Gruppe von Lamellen (9, 12) bestehen.

17. Reflexionsvorrichtung nach einem oder mehreren der vorherigen Ansprüche 1 bis 16, **dadurch gekennzeichnet, daß** die Lamellen (4, 9, 12) zumindest teilweise beweglich sind.

18. Reflexionsvorrichtung nach einem oder mehreren der vorherigen Ansprüche 1 bis 17, **dadurch gekennzeichnet, daß** Lamellen (9, 12) sowohl über als auch unterhalb des Spiegels (7) angeordnet sind.

19. Reflexionsvorrichtung nach einem oder mehreren der vorherigen Ansprüche 1 bis 18, **dadurch gekennzeichnet, daß** oberhalb des Spiegels (7) zumindest vier hochreflektierende Lamellen (9) angeordnet sind und unterhalb des Spiegels (7) zumindest zwei hochreflektierende Lamellen (12) angeordnet sind.

20. Reflexionsvorrichtung nach einem oder mehreren der vorherigen Ansprüche 1 bis 19, **dadurch gekennzeichnet, daß** der Spiegel (7) verfahrbar ist.

21. Reflexionsvorrichtung nach einem oder mehreren der vorherigen Ansprüche 1 bis 19, **dadurch gekennzeichnet, daß** der Spiegel (7) fest installiert und unbeweglich ist.

22. Reflexionsvorrichtung nach einem oder mehreren der vorherigen Ansprüche 1 bis 21, **dadurch gekennzeichnet, daß** zur Sichtbarmachung von den dem Bediener nicht einsehbaren Bereichen eine Kamera eingesetzt wird.

23. Vorrichtung nach einem oder mehreren der obigen Ansprüche 1 bis 22, **dadurch gekennzeichnet, daß** sie ein Dimmsystem aufweist.

24. Vorrichtung nach einem oder mehreren der obigen Ansprüche 1 bis 23, **dadurch gekennzeichnet, daß** sie eine Steuereinheit (15, 16) aufweist, welche es ermöglicht, die einzelnen Positionen, Winkel und Geschwindigkeiten der einzelnen Vorrichtungselemente zentral zu steuern.

25. Vorrichtung nach einem oder mehreren der obigen Ansprüche 1 bis 24, **gekennzeichnet durch** zusätzliche Beleuchtungsvorrichtungen (1), welche die Reflexionsfläche (3) in einem anderen Winkel bestrahlen.

## Claims

1. A reflective device for use in lighting devices for work stations and inspection stations composed of at least one areal reflective surface (3) built from planar segments (4) that are adjustable with respect to one an other, with a highly reflective surface to reflect incident beams emitted from at least one light source (1),
**characterised in that**
the reflective surface (3) is divided into at least two parts, so that at least two partial surface elements (3a, 3b, 3c) are formed with segments (4), whereby the division of the reflective surface (3) occurs along a plane running parallel to the direction of the radiation, and the partial surface elements (3a, 3b, 3c) formed by the division are movable with respect to one another, whereby exclusively indirect, directed light, which is approximately parallel, strikes the workpiece surface to be examined.

2. A reflective device according to claim 1, **characterised in that** the partial surface elements (3a, 3b, 3c) resulting from the division of the reflective surface (3) are relatively adjustable at an angle with respect to one another.

3. A reflective device according to claim 1 or 2, **characterised in that** the segments (4) forming the reflective surface (3) run in the longitudinal direction crosswise to the reflective direction, and the segments (4) are movable about their longitudinal axis.

4. A reflective device according to one or more of the preceding claims, **characterised in that** at least one variably positionable device (7, 8, 11) is arranged to visualise and brighten an area of the workpiece (10) that is not directly visible to the operator.

5. A reflective device according to one or more of claims 1 through 4, **characterised in that** it has at least one light source (1).

6. A reflective device according to one or more of the preceding claims 1 through 5, **characterised in that** a twofold light redirection is effected by a redirection reflector and the reflective surface (3).

7. A reflective device according to one or more of the preceding claims 1 through 6, **characterised in that** the reflective surface (3) is curved concavely in the direction of the radiation source (1).

8. A reflective device according to one or more of the preceding claims 1 through 7, **characterised in that** the reflective surface (3) is divided into three partial surface elements (3a, 3b, 3c) that are movable with respect to one another and at adjustable angles to one another.

9. A reflective device according to one or more of the preceding claims 1 through 8, **characterised in that** the partial surface elements (3a, 3b, 3c) are arranged using jointed suspensions that enable the partial surface elements (3a, 3b, 3c) to be moved in such a way that the angle of reflection of the light can be determined through the focus of the reflective surface (3), which can be moved and is divided into at least two parts.

10. A reflective device according to one or more of the preceding claims 1 through 9, **characterised in that** the segments (4) of the reflective surface (3), which are adjustable with respect to one another, are blades.

11. A reflective device according to claim 10, **characterised in that** the blades (4) are made of aluminium.

12. A reflective device according to one or more of the preceding claims 1 through 11, **characterised in that** the emitters (1) have high light density, and that a relatively low lux number arrives at the inspection surface.

13. A reflective device according to one or more of the preceding claims 1 through 12, **characterised in that** it has filters and dimmers that control the lux number arriving at the inspection surface.

14. A reflective device according to one or more of the preceding claims 1 through 13, **characterised in that** the colour temperature is at least 5500 Kelvin.

15. A reflective device according to one or more of the preceding claims 1 through 14, **characterised in that** the device (7, 8, 11) for visualisation of the side lying opposite from the operator has multiple reflective elements (9, 12).

16. A reflective device according to claim 15, **characterised in that** the reflective elements (9, 12) consist of a mirror (7) and at least one group of blades (9, 12).

17. A reflective device according to one or more of the preceding claims 1 through 16, **characterised in that** the blades (4, 9, 12) are at least partially movable.

18. A reflective device according to one or more of the preceding claims 1 through 17, **characterised in that** the blades (9, 12) are arranged both above and below the mirror (7).

19. A reflective device according to one or more of the preceding claims 1 through 18, **characterised in that** at least four highly reflective blades (9) are arranged above the mirror (7) and at least two highly reflective blades (12) are arranged below the mirror (7).

20. A reflective device according to one or more of the preceding claims 1 through 19, **characterised in that** the mirror (7) is movable.

21. A reflective device according to one or more of the preceding claims 1 through 19, **characterised in that** the mirror (7) is fixedly installed and immovable.

22. A reflective device according to one or more of the preceding claims 1 through 21, **characterised in that** a camera is used to visualise regions that are not visible to the operator.

23. A device according to one or more of the above claims 1 through 22, **characterised in that** it has a dimming system.

24. A device according to one or more of the above claims 1 through 23, **characterised in that** it has a control unit (15, 16) that enables centralised control of the individual positions, angles, and speeds of the individual device elements.

25. A device according to one or more of the above claims 1 to 24, **characterised by** additional illumination devices (1) that irradiate the reflective surface (3) at a different angle.

## Revendications

1. Appareil à lumière réfléchie destiné à être utilisé dans des dispositifs d'éclairage de postes de travail et d'essais, composé d'au moins une surface réfléchissante (3) mince, composée de segments (4) plans ajustables les uns par rapport aux autres et ayant une surface fortement réfléchissante pour la réflexion de rayons incidents émis par au moins une source lumineuse (1), **caractérisé en ce que** la surface de réflexion (3) est partagée au moins en deux, de manière à former au moins deux éléments partiels de surface (3a, 3b, 3c) avec des segments (4), la division de la surface réfléchissante (3) étant effectuée le long d'un plan parallèle au sens des rayons et les éléments partiels de surface (3a, 3b, 3c) formés par la division étant mobiles les uns par rapport aux autres, tandis que la lumière qui atteint la surface de la pièce à examiner est exclusivement une lumière indirecte dirigée qui est approximativement parallèle.

2. Appareil à lumière réfléchie selon la revendication 1, **caractérisé en ce que** les éléments partiels de surface (3a, 3b, 3c) formés par la division de la surface réfléchissante (3) sont mobiles les uns par rapport aux autres selon un certain angle.

3. Appareil à lumière réfléchie selon la revendication 1 ou 2, **caractérisé en ce que** les segments (4) formant la surface réfléchissante (3) sont perpendiculaires au sens de réflexion dans le sens longitudinal et les segments (4) sont mobiles autour de leur axe longitudinal.

4. Appareil à lumière réfléchie selon une ou plusieurs des revendications précédentes, **caractérisé en ce qu'**il est prévu au moins un dispositif à positionnement variable (7, 8, 11) pour visualiser et éclairer les zones d'une pièce qui ne sont pas directement visibles pour l'utilisateur (10).

5. Appareil à lumière réfléchie selon une ou plusieurs des revendications 1 à 4, **caractérisé en ce qu'**il possède au moins une source lumineuse (1).

6. Appareil à lumière réfléchie selon une ou plusieurs des revendications 1 à 5, **caractérisé en ce qu'**une double déviation de la lumière est réalisée par un réflecteur de déviation et la surface réfléchissante (3).

7. Appareil à lumière réfléchie selon une ou plusieurs des revendications 1 à 6, **caractérisé en ce que** la surface réfléchissante (3) est concave en direction de la source de rayonnement (1).

8. Appareil à lumière réfléchie selon une ou plusieurs des revendications 1 à 7, **caractérisé en ce que** la surface réfléchissante (3) est partagée en trois éléments partiels de surface (3a, 3b, 3c) mobiles les uns par rapport aux autres et ajustables les uns par rapport aux autres selon un certain angle.

9. Appareil à lumière réfléchie selon une ou plusieurs des revendications 1 à 8, **caractérisé en ce que** les éléments partiels de surface (3a, 3b. 3c) sont disposés sur des suspensions articulées, qui permettent un mouvement des éléments partiels de surface (3a, 3b, 3c) tel que l'angle de réflexion de la lumière peut être déterminé par le point focal de la surface réfléchissante (3) mobile et partagée en deux au moins.

10. Appareil à lumière réfléchie selon une ou plusieurs des revendications 1 à 9, **caractérisé en ce que** les segments (4) ajustables les uns par rapport aux autres de la surface réfléchissante (3) sont des lamelles.

11. Appareil à lumière réfléchie selon la revendication 10, **caractérisé en ce que** les lamelles (4) sont en aluminium.

12. Appareil à lumière réfléchie selon une ou plusieurs des revendications 1 à 11, **caractérisé en ce que** les projecteurs (1) ont une grande densité de lumière et **en ce qu'**un éclairement en lux relativement faible arrive sur la surface de contrôle.

13. Appareil à lumière réfléchie selon une ou plusieurs des revendications 1 à 12, **caractérisé en ce qu'**il possède des filtres et des atténuateurs qui régulent l'éclairement en lux arrivant sur la surface de contrôle.

14. Appareil à lumière réfléchie selon une ou plusieurs des revendications 1 à 13, **caractérisé en ce que** la couleur de la lumière est d'au moins 5500 K.

15. Appareil à lumière réfléchie selon une ou plusieurs des revendications 1 à 14, **caractérisé en ce que** le dispositif (7, 8, 11) pour visualiser le côté opposé à l'utilisateur possède plusieurs éléments réfléchissants (9, 12).

16. Appareil à lumière réfléchie selon la revendication 15, **caractérisé en ce que** les éléments réfléchissants (9, 12) sont formés par un miroir (7) et au moins un groupe de lamelles (9, 12).

17. Appareil à lumière réfléchie selon une ou plusieurs des revendications 1 à 16, **caractérisé en ce que** les lamelles (4, 9, 12) sont au moins partiellement mobiles.

18. Appareil à lumière réfléchie selon une ou plusieurs des revendications 1 à 17, **caractérisé en ce que** des lamelles (9, 12) sont disposées aussi bien au-dessus du miroir (7) qu'en dessous.

19. Appareil à lumière réfléchie selon une ou plusieurs des revendications 1 à 18, **caractérisé en ce qu'**il est prévu au-dessus du miroir (7) au moins quatre lamelles fortement réfléchissantes (9) et en dessous du miroir (7) au moins deux lamelles fortement réfléchissantes (12).

20. Appareil à lumière réfléchie selon une ou plusieurs des revendications 1 à 19, **caractérisé en ce que** le miroir (7) est déplaçable.

21. Appareil à lumière réfléchie selon une ou plusieurs des revendications 1 à 19, **caractérisé en ce que** le miroir (7) est installé à demeure et immobile.

22. Appareil à lumière réfléchie selon une ou plusieurs des revendications 1 à 21, **caractérisé en ce qu'**une caméra est utilisée pour visualiser les zones invisibles à l'utilisateur.

23. Appareil selon une ou plusieurs des revendications 1 à 22, **caractérisé en ce qu'**il comporte un système d'atténuation.

24. Appareil selon une ou plusieurs des revendications 1 à 23, **caractérisé en ce qu'**il comporte une unité de commande (15, 16) qui permet de régler de façon centralisée les positions, angles et vitesses individuels des différents éléments de l'appareil.

25. Appareil selon une ou plusieurs des revendications 1 à 24, **caractérisé en ce qu'**il comporte des appareils d'éclairage supplémentaires (1), qui éclairent la surface réfléchissante (3) sous un autre angle.
